(19) Europäisches Patentamt
European Patent Office
Office européen des brevets

(11) **EP 2 164 040 B1**

(12) **EUROPEAN PATENT SPECIFICATION**

(45) Date of publication and mention
of the grant of the patent:
**16.01.2013 Bulletin 2013/03**

(51) Int Cl.:
***G06T 3/40*** *(2006.01)*

(21) Application number: **09252006.3**

(22) Date of filing: **18.08.2009**

(54) **System and method for high quality image and video upscaling**

System und Verfahren zur Vergrößerung von hochqualitativen Bildern und Video

Système et procédé pour une grande qualité d'image et l'interpolation vidéo

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **15.09.2008 US 283855**

(43) Date of publication of application:
**17.03.2010 Bulletin 2010/11**

(73) Proprietors:
• **Sony Corporation**
  **Tokyo 108-0075 (JP)**
• **Sony Electronics Inc.**
  **Park Ridge, NJ 07656 (US)**

(72) Inventors:
• **Zhang, Ximin**
  **San Jose CA 95129 (US)**
• **Liu, Ming Chang**
  **San Jose CA 95130 (US)**

(74) Representative: **DeVile, Jonathan Mark et al**
  **D Young & Co LLP**
  **120 Holborn**
  **London EC1N 2DY (GB)**

(56) References cited:
**US-A1- 2002 076 121     US-A1- 2002 126 900**
**US-A1- 2006 115 184**

• **LEI ZHANG ET AL: "An edge-guided image interpolation algorithm via directional filtering and data fusion", IEEE TRANSACTIONS ON IMAGE PROCESSING IEEE USA, vol. 15, no. 8, August 2006 (2006-08), pages 2226-2238, ISSN: 1057-7149**

**Description**

Field of the Invention:

The present invention relates to methods and systems for improving quality of digital content. In one example, embodiments of the present invention relate to image/video processing, and more specifically, to enhancing the image/ video processing by upscaling.

Background of the Invention:

Upscaling or resolution enhancement is a technique of fundamental importance in image and video processing. By using upscaling, higher resolution images or videos are able to be generated from acquired lower resolution images or videos. Previously, the focus was on how to produce high quality still images. The applications were in medical imaging, digital photography and others. With the emergence of online video entertainment and more and more households adopting big screen televisions, low complexity video upscaling is becoming more important. For instance, a technique to let television produce high definition-like effects from DVD contents is highly desirable.

Since upscaling is fundamental to many image processing applications, it has been investigated for many years. Many non-linear methods have been proposed. Although some of the proposals show impressive results on selected applications, due to high complexity and some unrealistic assumptions, they have not been adopted in commercial video products. On the other hand, the low complexity linear methods such as pixel duplication, bi-linear interpolation and bi-cubic interpolation have been used with some variations due to the advantages in complexity and robustness to the statistic change of the video. However, they have some inherent defects. For instance, pixel duplication generates block artifacts, bi-linear interpolation blurs the details and bi-cubic methods produce overshooting problems across edges and jaggy artifacts along the edge.

US - A - 2002/076121 discloses an image transform method, for transforming original input image data into expanded image data comprising oblique, vertical and horizontal interpolation units.

US - A - 2006/115184 D2 discloses an image processing apparatus for converting the resolution of an image wherein a weight for a statistical diagonal interpolation pixel is set based on a slope having the statistically highest confidence level.

The article "An edge-guided image interpolation algorithm via directional filtering and data fusion", by Zhang Lei et al in IEEE TRANSACTIONS ON IMAGE PROCESSING, vol. 15, no. 8, August 2006, pages 2226-2238 discloses a new edge-guided nonlinear interpolation technique through directional filtering and data fusion.

Summary of the Invention:

Various aspects and features of the present invention are defined in the appended claims.

A low complexity upscaling method to generate higher resolution image and video with high quality is described herein. Natural edge smoothness and sharpness are preserved while overshooting artifacts and the "edge dilation" problem are eliminated or at least reduced. To obtain edge smoothness and remove jaggy artifacts along the edge, a bi-directional filtering which is based on two orthogonal directions is used to generate higher resolution pixels. The direction close to the edge direction is heavily weighted, and the direction far from the edge direction is lightly weighted. The weight of each direction is determined by the developed directional vector difference measurement method. To eliminate or at least reduce the overshooting artifacts and solving the thick edge problem, a dual-sided interpolation method is implemented. By using the dual-sided interpolation method, the interpolation result is pushed towards a dominant transition desired location which removes overshooting artifacts. A thin and sharp edge is obtained instead of a blurred, thick edge.

In one aspect, a method of improving quality of digital content on a computing device comprises performing directionality analysis on the digital content, generating diagonal high resolution pixels, generating horizontal high resolution pixels, generating vertical high resolution pixels and combining the diagonal high resolution pixels, the horizontal high resolution pixels and the vertical high resolution pixels to form high resolution digital content. Generating the diagonal high resolution pixels comprises applying dual-sided adaptive interpolation along the 45E direction and the 135E direction to obtain intermediate values and bi-directional filtering to combine the intermediate values to generate final diagonal high resolution pixels based on two diagonal direction analyses. The dual-sided adaptive interpolation comprises calculating two single side interpolation results and weighted filtering the two single side interpolation results to obtain a final interpolation result. The dual-sided adaptive interpolation further comprises calculating two single side transition dominance levels and calculating two single side weights based on the transition dominance levels. Bi-directional filtering further comprises calculating directional vector differences and calculating directional weights based on the directional vector differences. The diagonal high resolution pixels are generated from neighboring low resolution pixels along the 45E direction and the 135E direction. Generating the horizontal high resolution pixels comprises applying multi-tap interpolation along a horizontal direction to obtain intermediate values and bi-directional filtering to combine the intermediate values to generate final horizontal high resolution pixels based on horizontal direction analyses. Bi-directional filtering further comprises calculating directional vector differences and calculating directional weights based on the directional vector differences. The directional weights are reused when generating the vertical high resolution pixels, if the directional weights are obtained for the horizontal high resolution pixels before the vertical high resolution pixels. The horizontal high resolution pixels are generated from neighboring low resolution pixels along the horizontal direction and the diagonal high resolution pixels along the vertical direction. Generating the vertical high resolution pixels comprises applying multi-tap interpolation along a vertical direction to obtain intermediate values and bi-directional filtering to combine the intermediate values to generate final vertical high resolution pixels based on vertical direction analyses. Bi-directional filtering further comprises calculating directional vector differences and calculating directional weights based on the directional vector differences. The directional weights are reused when generating the horizontal high resolution pixels, if the directional weights are obtained for the vertical high resolution pixels before the horizontal high resolution pixels. The vertical high resolution pixels are generated from neighboring low resolution pixels along the vertical direction and the diagonal high resolution pixels along the horizontal direction. The digital content is selected from the group consisting of an image and a video. The computing device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system. In another aspect, a system for improving quality of digital content implemented with a computing device comprises a directionality analysis module configured for performing directionality analysis on the digital content, a diagonal module operatively coupled to the directionality analysis module, the diagonal module configured for generating diagonal high resolution pixels, a horizontal module operatively coupled to the diagonal module, the horizontal module configured for generating horizontal high resolution pixels, a vertical module operatively coupled to the horizontal module, the vertical module configured for generating vertical high resolution pixels and a combining module operatively coupled to the vertical module, the combining module configured for combining the diagonal high resolution pixels, the horizontal high resolution pixels and the vertical high resolution pixels to form high resolution digital content. The diagonal module is further configured for applying dual-sided adaptive interpolation along the 45E direction and the 135E direction to obtain intermediate values and bi-directional filtering to combine the intermediate values to generate final diagonal high resolution pixels based on two diagonal direction analyses. The dual-sided adaptive interpolation comprises calculating two single side interpolation results and weighted filtering the two single side interpolation results to obtain a final interpolation result. The dual-sided adaptive interpolation further comprises calculating two single side transition dominance levels and calculating two single side weights based on the transition dominance levels. Bi-directional filtering further comprises calculating directional vector differences and calculating directional weights based on the directional vector differences. The diagonal high resolution pixels are generated from neighboring low resolution pixels along the 45E direction and the 135E direction. The horizontal module is further configured for applying multi-tap interpolation along a horizontal direction to obtain intermediate values and bi-directional filtering to combine the intermediate values to generate final horizontal high resolution pixels based on horizontal direction analyses. Generating the bi-directional filtering further comprises calculating directional vector differences and calculating directional weights based on the directional vector differences. The directional weights are reused when generating the vertical high resolution pixels, if the directional weights are obtained for the horizontal high resolution pixels before the vertical high resolution pixels. The horizontal high resolution pixels are generated from neighboring low resolution pixels along the horizontal direction and the diagonal high resolution pixels along the vertical direction. The vertical module is further configured for applying multi-tap interpolation along a vertical direction to obtain intermediate values and bi-directional filtering to combine the intermediate values to generate final vertical high resolution pixels based on vertical direction analyses. Generating the bi-directional filtering further comprises calculating directional vector differences and calculating directional weights based on the directional vector differences. The directional weights are reused when generating the horizontal high resolution pixels, if the directional weights are obtained for the vertical high resolution pixels before the horizontal high resolution pixels. The vertical high resolution pixels are generated from neighboring low resolution pixels along the vertical direction and the diagonal high resolution pixels along the horizontal direction. The digital content is selected from the group consisting of an image and a video. The computing device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

In another aspect, a device comprises a memory for storing an application, the application configured for performing directionality analysis on digital content, generating diagonal high resolution pixels, generating horizontal high resolution pixels, generating vertical high resolution pixels and combining the diagonal high resolution pixels, the horizontal high resolution pixels and the vertical high resolution pixels to form high resolution digital content and a processing component coupled to the memory, the processing component configured for processing the application. Generating the diagonal high resolution pixels comprises applying dual-sided adaptive interpolation along the 45E direction and the 135E direction to obtain intermediate values and bi-directional filtering to combine the intermediate values to generate final diagonal high resolution pixels based on two diagonal direction analyses. The dual-sided adaptive interpolation comprises calculating two single side interpolation results and weighted filtering the two single side interpolation results to obtain a final interpolation result. The dual-sided adaptive interpolation further comprises calculating two single side transition dominance levels and calculating two single side weights based on the transition dominance levels. Bi-directional filtering further comprises calculating directional vector differences and calculating directional weights based on the directional vector differences. The diagonal high resolution pixels are generated from neighboring low resolution pixels along the 45E direction and the 135E direction. Generating the horizontal high resolution pixels comprises applying multi-tap interpolation along a horizontal direction to obtain intermediate values and bi-directional filtering to combine the intermediate values to generate final horizontal high resolution pixels based on horizontal direction analyses. Bi-directional filtering further comprises calculating directional vector differences and calculating directional weights based on the directional vector differences. The directional weights are reused when generating the vertical high resolution pixels, if the directional weights are obtained for the horizontal high resolution pixels before the vertical high resolution pixels. The horizontal high resolution pixels are generated from neighboring low resolution pixels along the horizontal direction and the diagonal high resolution pixels along the vertical direction. Generating the vertical high resolution pixels comprises applying multi-tap interpolation along a vertical direction to obtain intermediate values and bi-directional filtering to combine the intermediate values to generate final vertical high resolution pixels based on vertical direction analyses. Bi-directional filtering further comprises calculating directional vector differences and calculating directional weights based on the directional vector differences. The directional weights are reused when generating the horizontal high resolution pixels, if the directional weights are obtained for the vertical high resolution pixels before the horizontal high resolution pixels. The vertical high resolution pixels are generated from neighboring low resolution pixels along the vertical direction and the diagonal high resolution pixels along the horizontal direction. The digital content is selected from the group consisting of an image and a video. The device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television and a home entertainment system.

Brief Description of the Drawings:

Embodiments of the invention will now be described with reference to the accompanying drawings, throughout which like parts are referred to by like references, and in which:
FIG. 1 illustrates a flowchart of a method of upscaling.
FIG. 2 illustrates bi-directional analysis based HR pixel generation.
FIG. 3 illustrates six tap interpolation.
FIG. 4 illustrates a prior art interpolation result.
FIG. 5 illustrates dual-sided adaptive interpolation results.
FIG. 6 illustrates diagonal directionality analysis.
FIG. 7 illustrates directionality analysis for pixel generation in horizontal positions.
FIG. 8 illustrates directionality analysis for pixel generation in vertical positions.
FIG. 9 illustrates a block diagram of an exemplary computing device configured to implement the method of upscaling.

Detailed Description of the Preferred Embodiment:

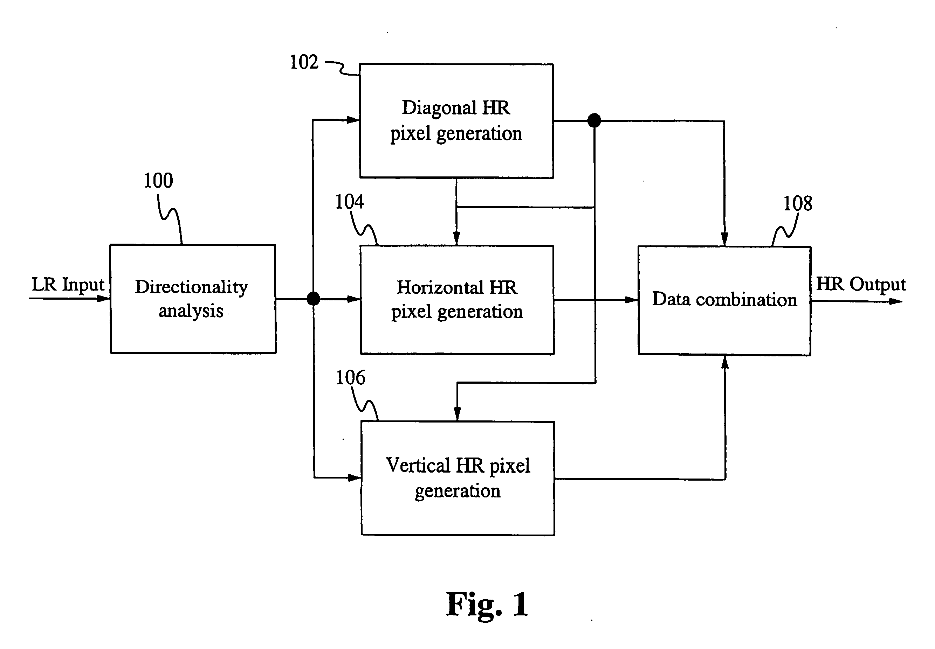

A low complexity upscaling method to generate higher resolution image and video with high quality is described herein. In order to obtain the objectives, a focus is put on preserving natural edge smoothness and sharpness, eliminating overshooting artifacts and the "edge dilation" problem. To obtain the edge smoothness and remove the jaggy artifacts along the edge, a bi-directional filtering which is based on two orthogonal directions is used to generate the higher resolution pixel. The direction close to the edge direction is heavily weighted, and the direction far away from the edge direction is lightly weighted. The weight of each direction is determined by the developed directional vector difference measurement method. To eliminate the overshooting artifacts and solving the thick edge problem, a dual-sided interpolation method is implemented. By using the dual-sided interpolation method, the interpolation result is pushed towards a dominant transition desired location. As a result, overshooting artifacts are removed. A thin and sharp edge is obtained instead of a blurred, thick edge.
The overall scheme of the upscaling method is illustrated in Figure 1. In the step 100, directionality analysis is applied to an acquired Low Resolution (LR) input (e.g. an image or a video). The pixel intensity variations along four directions are analyzed and then utilized in the steps 102, 104 and 106. The four directions include a horizontal direction, a vertical direction, a diagonal 45E direction and a diagonal 135E direction. Specifically, based on the directionality analysis along the 45E direction and the diagonal 135E direction, the diagonal Higher Resolution (HR) pixels are generated from the neighbor low resolution pixels, in the step 102. After that, the horizontal HR pixels are generated from the horizontal neighbor low resolution pixels and the generated diagonal HR pixels, in the step 104. The vertical HR pixels are generated from the vertical neighbor low resolution pixels and the generated diagonal HR pixels, in the step 106. After all of the HR pixels are generated, they are combined to generate an HR picture, in the step 108.

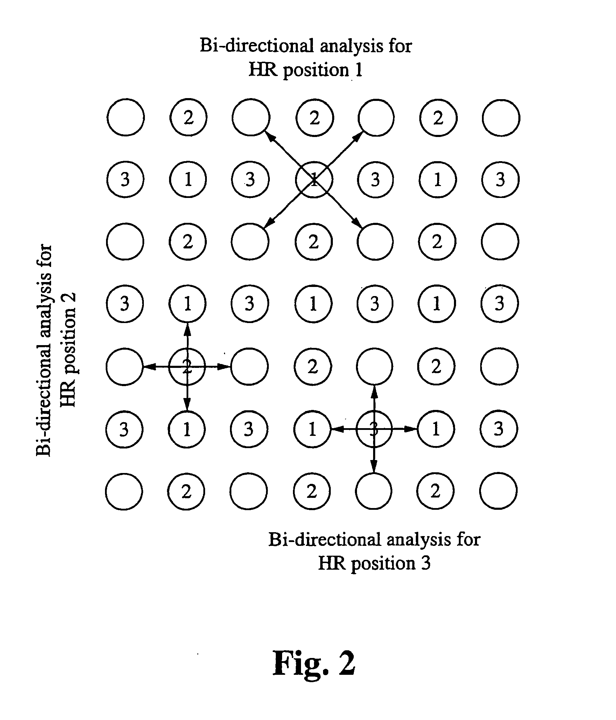

The notation of the HR pixels is illustrated in Figure 2. In Figure 2, a "1" denotes all diagonal HR pixels, a "2" denotes all horizontal HR pixels and a "3" denotes all vertical HR pixels when the resolution is increased by 2 in both the vertical and horizontal directions. All higher resolution pixels located between two diagonal 45E neighbor lower resolution pixels or two diagonal 135E neighbor lower resolution pixels are denoted as diagonal HR pixels. All higher resolution pixels located between two horizontal neighbor lower resolution pixels are denoted as horizontal HR pixels. The other resolution pixels are denoted as vertical HR pixels.

To generate a diagonal HR pixel, dual-sided adaptive interpolation is applied along the 45E direction and the 135E direction to obtain two intermediate values. Then, bi-directional filtering is used to combine these intermediate values to generate a final diagonal HR pixel based on two diagonal direction analyses. To generate horizontal and vertical HR pixels, multi-tap interpolation is applied along the horizontal direction and vertical direction to obtain two intermediate values. Then, bi-directional filtering is used to combine these intermediate values to generate final horizontal and vertical HR pixels based on horizontal and vertical direction analyses.

Dual-sided Adaptive Interpolation

According to the Nyquist theorem, any signal whose spectrum is limited to $f$ is able to be perfectly recovered as long as it is sampled with a rate greater than $2f$. Various interpolation methods have been developed to simulate the recover process based on the Nyquist theorem. In the smooth areas of a picture, there are not many variations. The local spectrum is limited within a small range. It is reasonable to assume a lower resolution picture is obtained by sampling the HR picture with a rate at least twice of the local spectrum limit. Under this circumstance, most of the previous interpolation methods work well. In the edge areas of a picture, the spatial variations are very big. The sampling rate to generate the low resolution picture is lower than twice of the local spectrum limit. Under this circumstance, aliasing artifacts are generated. Two of the most common artifacts are overshooting artifacts and edge dilation artifacts. The overshooting artifacts are shown as an unnatural bright line along a dark edge or an unnatural dark line along a bright edge. The edge dilation artifacts are shown as transferring a thin sharp edge to a dilated blur edge.

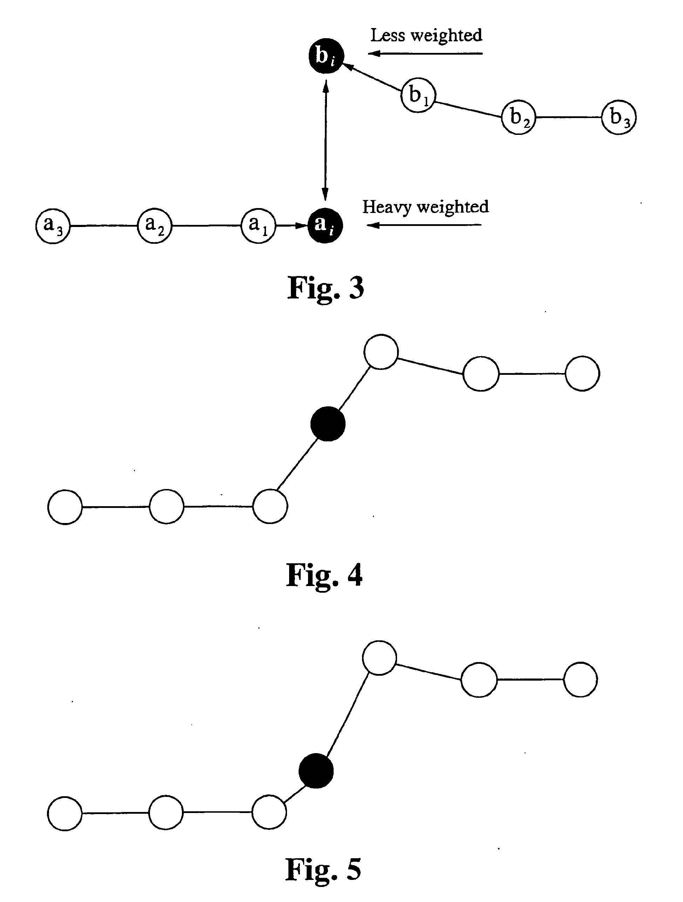

To solve the above problems, a dual-sided interpolation method is used. The concept of this method is described using an example of six tap interpolation as shown in Figure 3. An HR pixel Y is produced in the position where its three left neighbor LR pixels are $a_1$, $a_2$, $a_3$, and its three right neighbor LR pixels are $b_1$, $b_2$, $b_3$. By using a prior art interpolation method, the interpolation is able to be obtained by equation:

$$ Y = ( w_1 \bullet P_{a_1} + w_2 \bullet P_{a_2} + w_3 \bullet P_{a_3} + w_4 \bullet P_{b_1} + w_5 \bullet P_{b_2} + w_6 \bullet P_{b_3} ) / W $$

In the above equation, $w_1 \sim w_6$ are the interpolation coefficients, P is the pixel intensity and W is the summation of $w_1 \sim w_6$. If HR pixel Y is in the middle of two LR pixels, the interpolation is symmetrical and $w_1 = w_4$, $w_2 = w_5$, $w_3 = w_6$. Let $a_i$ represent the interpolation result of its three left neighbor LR pixels and $b_i$ represent the interpolation result of its three right neighbor LR pixels. The following is the result:

$$ P_{a_i} = 2( w_1 \bullet P_{a_1} + w_2 \bullet P_{a_2} + w_3 \bullet P_{a_3} ) / W $$

$$ P_{b_i} = 2( w_1 \bullet P_{b_1} + w_2 \bullet P_{b_2} + w_3 \bullet P_{b_3} ) / W $$

This process is shown in Figure 3.
The prior art interpolation result is able to be interpreted as

$$Y = (P_{a_i} + P_{b_i}) >> 1$$

In doing so, the final interpolation result is shown in Figure 4, which clearly shows the edge is blurred. Similarly, it is able to be shown that overshooting artifacts are generated by using the prior art methods.

To solve these problems, the characteristics of natural pictures have been investigated. The problems are able to be solved if the interpolation result is pushed towards a dominant intensity transition desired location. The intensity difference between the single side interpolation result and its neighbor LR pixel is used to determine the transition dominance level as follows. The greater the difference is, the smaller the dominance level is.

$$D_a = \left| P_{a_i} - P_{a_1} \right|$$

$$D_b = \left| P_{b_i} - P_{b_1} \right|$$

The result with a higher dominance level is more desired than the result with a lower dominance level. Therefore, more weight is given to the result with the higher dominance level. The following equations are used to calculate the weights:

$$W_a = \frac{(D_b << 3) + (D_a + D_b) >> 1}{D_a + D_b}$$

$$W_b = 8 - W_a$$

Then, the final interpolation result is obtained by

$$Y = (W_a \bullet P_{a_i} + W_b \bullet P_{b_i}) >> 3$$

To achieve the natural smoothness, a single line edge is processed differently. The following condition checks are used to detect the single line edge:

$$(P_{b_1} - P_{b_2} > T) \& \& (P_{b_1} - P_{a_1} > T) \qquad (P_{a_1} - P_{a_2} > T) \& \& (P_{a_1} - P_{b_1} > T)$$

or

$$(P_{b_1} - P_{b_2} < -T) \& \& (P_{b_1} - P_{a_1} < -T) \qquad (P_{a_1} - P_{a_2} < -T) \& \& (P_{a_1} - P_{b_1} < -T)$$

With the single line edge detection result, the dual-sided adaptive interpolation is performed by the following equations:

$$Y = \begin{array}{ll} (P_{a_i} + P_{b_i}) >> 1 & single\_line\_edge \\ (W_a \bullet P_{a_i} + W_b \bullet P_{b_i}) >> 3 & otherwise \end{array}$$

In Figure 3, $a_i$ has a higher dominance level and thus is heavily weighted in the method described herein. As a result, a sharp edge is obtained as is shown in Figure 5.

In Figure 5, a six tap interpolation is used as an example embodiment to explain the method described herein. By following the same reasoning, the spirit of the invention is able to be used in any interpolation embodiment.

Higher Resolution Pixel Generation in Diagonal Positions

The diagonal HR pixels are generated from the neighbor low resolution pixels along the 45E and 135E directions. Based on the diagonal directionality analysis, different weights are given to corresponding directional interpolation results. A weighted filtering of two directional interpolation results is applied to generate the diagonal HR pixel.

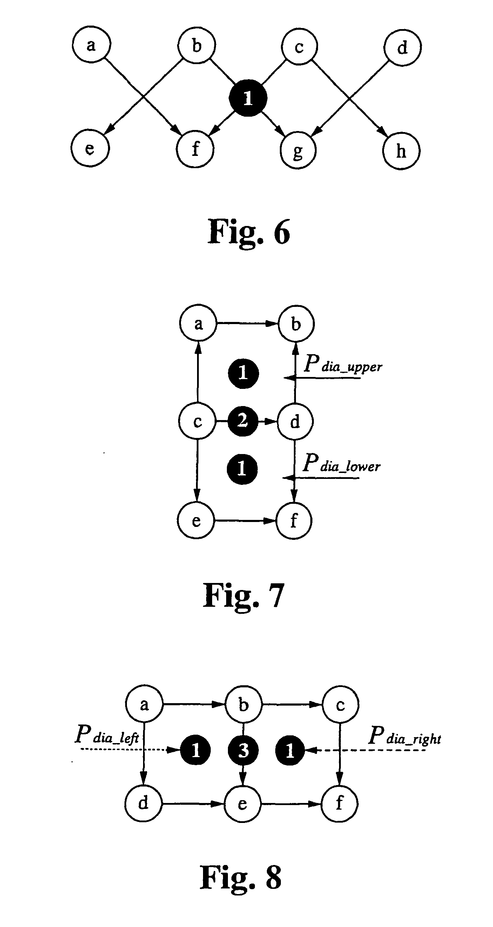

The diagonal directionality analysis is illustrated in Figure 6 where "1" denotes the diagonal HR pixel, and its eight neighbor LR pixels are used for directionality analysis.

In the developed method, the directional vector differences are calculated by the following equations:

$$D_{dia\,45°} = \left| P_b - P_e \right| + \left| P_c - P_f \right| + \left| P_d - P_g \right|$$

$$D_{dia\,135°} = \left| P_a - P_f \right| + \left| P_b - P_g \right| + \left| P_c - P_h \right|$$

Based on the vector differences, the directional weights are calculated by the following equations:

$$W_{dia\,45°} = \frac{(D_{dia\,135°} << 2) + (D_{dia\,45°} + D_{dia\,135°}) >> 1}{D_{dia\,45°} + D_{dia\,135°}}$$

$$W_{dia\,135°} = 4 - W_{dia\,45°}$$

A weighted filtering of two orthogonal directional interpolation results are used to generate the diagonal HR pixel as follows:

$$Y_1 = (W_{dia\,45°} \bullet P_{dia\,45°} + W_{dia\,135°} \bullet P_{dia\,135°}) >> 2$$

In the above equation, $P_{dia45E}$ is the dual-sided adaptive interpolation result along the 45E direction and $P_{dia135E}$ is the dual-sided adaptive interpolation result along the 135E direction.

Higher Resolution Pixel Generation in Horizontal Positions

The horizontal HR pixels are generated from the neighbor low resolution pixels along the horizontal direction and the diagonal HR pixels along the vertical direction. Based on the directionality analysis, different weights are given to corresponding directional interpolation results. A weighted filtering of two directional interpolation results is applied to generate the horizontal HR pixel.

The directionality analysis is illustrated in Figure 7. A "1" denotes the diagonal HR pixel and a "2" denotes the horizontal HR pixel. The six neighbor LR pixels are used for directionality analysis.

In the developed method, the directional vector differences are calculated by the following equations:

$$D_{hor} = (|P_a - P_b| + |P_c - P_d| + |P_e - P_f|) << 2$$

$$D_{ver} = (|P_a - P_c| + |P_b - P_d| + |P_c - P_e| + |P_d - P_f|) \bullet 3$$

Based on the vector differences, the directional weights are calculated by the following equations:

$$W_{dia\_ver} = \frac{(D_{hor} << 3) + (D_{hor} + D_{ver}) >> 1}{D_{hor} + D_{ver}}$$

$$W_{hor} = 8 - W_{dia\_ver}$$

A weighted filtering of two orthogonal directional interpolation results is used to generate the horizontal HR pixel as follows:

$$Y_2 = (W_{hor} \bullet P_{hor} + W_{dia\_ver} \bullet P_{dia\_ver}) >> 3$$

In the above equation, $P_{hor}$ is the conventional interpolation result along the horizontal direction and $P_{dia\_ver}$ is the two tap interpolation result along the vertical direction which is obtained by the following equation:

$$P_{dia\_ver} = (P_{dia\_upper} + P_{dia\_lower}) >> 1$$

Higher Resolution Pixel Generation in Vertical Positions

The vertical HR pixels are generated from the neighbor low resolution pixels along the vertical direction and the diagonal HR pixels along the horizontal direction. Based on the directionality analysis, different weights are given to corresponding directional interpolation results. A weighted filtering of two directional interpolation results is applied to generate the vertical HR pixel.

The directionality analysis is illustrated in Figure 8. A "1" denotes the diagonal HR pixel and a "3" denotes the vertical HR pixel. The six neighbor LR pixels are used for directionality analysis. Each LR pixel is shared by multiple HR pixels. The complexity of overall directionality analysis is dramatically reduced.

In the above description, the horizontal weight and vertical weight are calculated separately for vertical HR pixel and horizontal HR pixel generation. Since both the vertical HR pixel and the horizontal HR pixel are immediately neighbored to the same LR pixel, it is reasonable to assume the directionality is the same for them. To further reduce the complexity, the weight information is able to be reused. Namely, if the weights for vertical HR pixels are obtained first, they are also utilized for horizontal HR pixel generation. If the weights for horizontal HR pixel are obtained first, they are also utilized for vertical HR pixel generation.

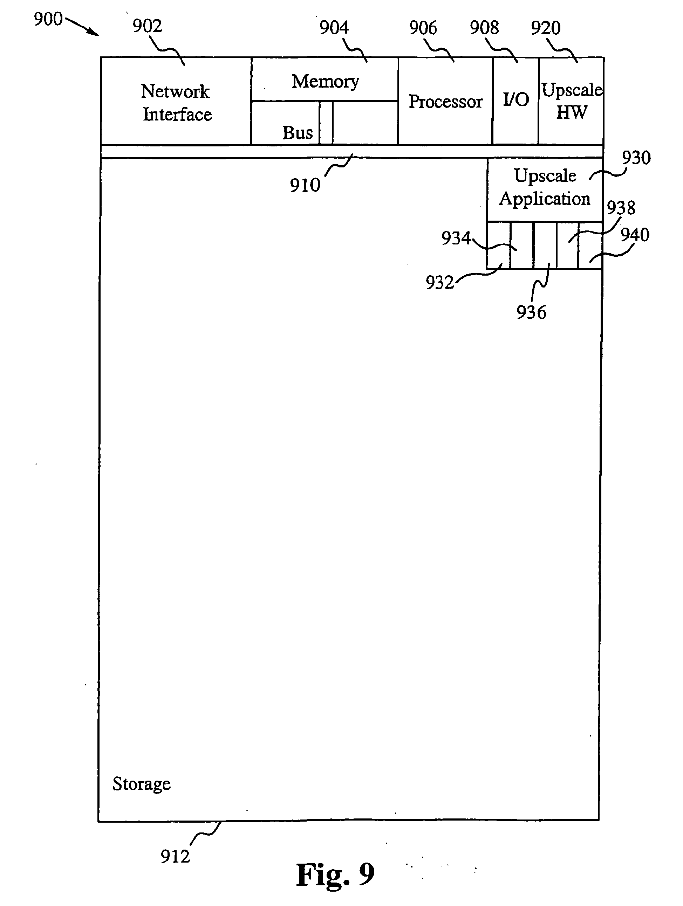

Figure 9 illustrates a block diagram of an exemplary computing device 900 configured to implement the upscaling method. The computing device 900 is able to be used to acquire, store, compute, communicate and/or display information such as images and videos. For example, a computing device 900 acquires an image or a video, and then the upscaling method improves the appearance of the image/video. In general, a hardware structure suitable for implementing the computing device 900 includes a network interface 902, a memory 904, a processor 906, I/O device(s) 908, a bus 910 and a storage device 912. The choice of processor is not critical as long as a suitable processor with sufficient speed is chosen. The memory 904 is able to be any conventional computer memory known in the art. The storage device 912 is able to include a hard drive, CDROM, CDRW, DVD, DVDRW, flash memory card or any other storage device. The computing device 900 is able to include one or more network interfaces 902. An example of a network interface includes a network card connected to an Ethernet or other type of LAN. The I/O device(s) 908 are able to include one or more of the following: keyboard, mouse, monitor, display, printer, modem, touchscreen, button interface and other devices. Upscaling application(s) 930 used to perform the upscaling method are likely to be stored in the storage device 912 and memory 904 and processed as applications are typically processed. More or less components shown in Figure 9 are able to be included in the computing device 900. In some embodiments, upscaling hardware 920 is included. Although the computing device 900 in Figure 9 includes applications 930 and hardware 920 for upscaling, the upscaling method is able to be implemented on a computing device in hardware, firmware, software or any combination thereof.

In some embodiments, the upscaling application(s) 930 include several applications and/or modules. In some embodiments, the upscaling application(s) 930 include a directionality analysis module 932, a diagonal module 934, a horizontal module 936, a vertical module 938 and a combining module 940.

As described above, the directionality analysis module 932 determines the direction of each pixel. The diagonal module 934 generates diagonal high resolution pixels. The horizontal module 936 generates horizontal high resolution pixels. The vertical module 938 generates vertical high resolution pixels. The combining module 940 combines the diagonal high resolution pixels, the horizontal high resolution pixels and the vertical high resolution pixels to form high resolution digital content.

Examples of suitable computing devices include a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®, a video player, a DVD writer/player, a television, a home entertainment system or any other suitable computing device.

To utilize the upscaling method, a computing device operates as usual, but the video/image processing is improved in that the image or video quality is improved to a higher quality. The utilization of the computing device from the user's perspective is similar or the same as one that uses a standard operation. For example, the user still simply turns on a digital camcorder and uses the camcorder to record a video. The upscaling method is able to automatically improve the quality of the video without user intervention. The upscaling method is able to be used anywhere that requires image and/or video processing. Many applications are able to utilize the upscaling method including, but not limited to, DVD video quality improvement, digital image quality improvement and digital video quality improvement.

In operation, the upscaling implementation enables many improvements related to image/video processing. By upscaling a lower quality image/video, better image/video results are obtained, particularly at the edges. The low complexity upscaling implementation described herein includes generating high resolution pixels using bi-directional filtering, dual-sided adaptive interpolation, directionality analysis using vector differences, directionality analysis using weight generation and information reuse. The implementation also includes diagonal HR pixel generation, horizontal HR pixel generation and vertical HR pixel generation. Additionally, the dual-sided adaptive interpolation includes calculating two single side interpolation results to determine a transition dominance level to determine weights of the two single side interpolation results. The dual-sided adaptive interpolation uses transition dominance levels to determine the weights of the two single side interpolation results. The dual-sided adaptive interpolation also includes weighted filtering of the two single side interpolation results to obtain a final interpolation result. The dual-sided adaptive interpolation includes single line edge detection. The vector difference-based directionality analysis includes calculating the diagonal direction differences for diagonal HR pixels. The vector difference-based directionality analysis also includes calculating the horizontal and vertical direction differences for horizontal HR pixels. The vector difference-based directionality analysis also includes calculating the horizontal and vertical direction differences for vertical HR pixels. Directionality analysis-based weight generation includes calculating weights for diagonal HR pixel generation. Directionality-based weight generation includes calculating the weights for horizontal and vertical HR pixel generation too. Thus, the specific implementation of upscaling is an improved implementation over the prior art by avoiding aliasing artifacts while keeping complexity low.

The present invention has been described in terms of specific embodiments incorporating details to facilitate the understanding of principles of construction and operation of the invention.

Such reference herein to specific embodiments and details thereof is not intended to limit the scope of the claims appended hereto. It will be readily apparent to one skilled in the art that other various modifications may be made in the embodiment chosen for illustration.

**Claims**

1. A upscaling method of generating higher resolution images or video from lower resolution images or video comprising low resolution pixels on a computing device comprising:

a. determining pixel intensities of the low resolution pixels along four directions;
b. generating diagonal high resolution pixels by applying dual-sided adaptive interpolation to the low resolution pixels along a 45° direction and a 135° direction by

i. calculating two single side interpolation results;
ii. calculating two single side transition dominance levels which are determined by intensity differences between the single side interpolation results and neighboring low resolution pixels;
iii. calculating two single side weights based on the transition dominance levels; and
iv. weighted filtering the two single sided interpolation result using the single side weights to obtain diagonal intermediate values,

combining the diagonal intermediate values using bi-directional filtering to generate diagonal high resolution pixels based on two diagonal direction analyses;
c. generating horizontal high resolution pixels by:

i. applying multi-tap interpolation to the low resolution pixels along a horizontal direction to obtain horizontal intermediate values; and
ii. combining the horizontal intermediate values to generate horizontal high resolution pixels based on horizontal direction analyses;

d. generating vertical high resolution pixels by:

i. applying multi-tap interpolation to the low resolution pixels along a vertical direction to obtain vertical intermediate values; and
ii. combining the vertical intermediate values to generate vertical high resolution pixels based on vertical direction analyses; and

e. combining the diagonal high resolution pixels, the horizontal high resolution pixels and the vertical high resolution pixels to form said high resolution images or video.

2. The method of claim 1 wherein the diagonal high resolution pixels are generated from neighboring low resolution pixels along the 45° direction and the 135° direction.

3. The method of claim 1 wherein the horizontal high resolution pixels are generated from neighboring low resolution pixels along the horizontal direction and the diagonal high resolution pixels along the vertical direction.

4. The method of claim 1 wherein the bi-directional filtering further comprises:

a. calculating directional vector differences; and
b. calculating directional weights based on the directional vector differences.

5. The method of claim 4 wherein the directional weights are reused when generating the vertical high resolution pixels, if the directional weights are obtained for the horizontal high resolution pixels before the vertical high resolution pixels.

6. The method of claim 4 wherein the directional weights are reused when generating the horizontal high resolution pixels, if the directional weights are obtained for the vertical high resolution pixels before the horizontal high resolution pixels.

7. The method of claim 1 wherein the vertical high resolution pixels are generated from neighboring low resolution pixels along the vertical direction and the diagonal high resolution pixels along the horizontal direction.

8. An upscaling system for generating higher resolution images or video from lower resolution images or video comprising low resolution pixels implemented with a computing device comprising:

a. an analysis module (932) configured for determining pixel intensities of the low resolution pixels in four directions;
b. a diagonal module (934) operatively coupled to the analysis module, the diagonal module configured for generating diagonal high resolution pixels by applying dual-sided adaptive interpolation to the low resolution pixels along a 45° direction and a 135° direction by:

i. calculating two single side interpolation results;
ii. calculating two single side transition dominance levels which are determined by intensity differences between the single side interpolation results and neighboring low resolution pixels; and
iii. calculating two single side weights based on the transition dominance levels;
iv. weighted filtering the two single sided interpolation result using the single side weights to obtain diagonal intermediate values;

and combining the diagonal intermediate values using bi-directional filtering to generate diagonal high resolution pixels based on two diagonal direction analyses;
c. a horizontal module (936) operatively coupled to the diagonal module, the horizontal module configured for generating horizontal high resolution pixels by:

i. applying multi-tap interpolation to the low resolution pixels along a horizontal direction to obtain horizontal intermediate values; and
ii. combining the horizontal intermediate values to generate horizontal high resolution pixels based on horizontal direction analyses;

d. a vertical module (938) operatively coupled to the horizontal module, the vertical module configured for generating vertical high resolution pixels by:

i. applying multi-tap interpolation to the low resolution pixels along a vertical direction to obtain vertical intermediate values; and
ii. combining the vertical intermediate values to generate vertical high resolution pixels based on vertical direction analyses; and

e. a combining module (940) operatively coupled to the vertical module, the combining module configured for combining the diagonal high resolution pixels, the horizontal high resolution pixels and the vertical high resolution pixels to form said high resolution images or video.

9. The system of claim 8 wherein the bi-directional filtering comprises:

a. calculating directional vector differences; and
b. calculating directional weights based on the directional vector differences.

10. The system of claim 8, wherein:

a. directional weights are reused when generating the horizontal high resolution pixels, if the directional weights are obtained for the vertical high resolution pixels before the horizontal high resolution pixels; and
b. the directional weights are reused when generating the vertical high resolution pixels, if the directional weights are obtained for the horizontal high resolution pixels before the vertical high resolution pixels.

11. The system of claim 8, wherein:

a. the vertical high resolution pixels are generated from neighboring low resolution pixels along the vertical direction and the diagonal high resolution pixels along the horizontal direction; and
b. the horizontal high resolution pixels are generated from neighboring low resolution pixels along the horizontal direction and the diagonal high resolution pixels along the vertical direction.

**Patentansprüche**

1. Hochskalierungsverfahren zur Erzeugung von Bildern oder Video höherer Auflösung aus Bildern oder Video niedrigerer Auflösung, die bzw. das Pixel niedriger Auflösung aufweisen bzw. aufweist, auf einer Recheneinrichtung, aufweisend:

a) Bestimmen von Pixelintensitäten der Pixel niedriger Auflösung entlang vier Richtungen,

b) Erzeugen von Diagonalpixeln hoher Auflösung durch Anwenden einer doppelseitigen adaptiven Interpolation auf die Pixel niedriger Auflösung entlang einer 45°-Richtung und einer 135°-Richtung, durch

    i) Berechnen von zwei Einseitiginterpolationsresultaten;
    ii) Berechnen von zwei Einseitig-Übergangsdominanzpegeln, die durch Intensitätsdifferenzen zwischen den Einseitiginterpolationsresultaten und benachbarten Pixeln niedriger Auflösung bestimmt werden;
    iii) Berechnen von zwei Einseitiggewichten auf Basis der Übergangsdominanzpegel; und
    iv) Gewichtetfiltern der zwei Einseitiginterpolationsresultate unter Benutzung der Einseitiggewichte, um Diagonalzwischenwerte zu erhalten;

Kombinieren der Diagonalzwischenwerte unter Benutzung einer Bidirektionalfilterung zum Erzeugen von Diagonalpixeln hoher Auflösung auf Basis von zwei Diagonalrichtungsanalysen,
c) Erzeugen von Horizontalpixeln hoher Auflösung, durch:

    i) Anwenden einer Mehrfachabgriffsinterpolation auf die Pixel niedriger Auflösung entlang einer horizontaler Richtung, um Horizontalzwischenwerte zu erhalten, und
    ii) Kombinieren der Horizontalzwischenwerte, um Horizontalpixel hoher Auflösung auf Basis von Horizontalrichtungsanalysen zu erzeugen,

d. Erzeugen von Vertikalpixeln hoher Auflösung durch:

    i) Anwenden einer Mehrfachabgriffsinterpolation auf die Pixel niedriger Auflösung entlang einer vertikalen Richtung, um Vertikalzwischenwerte zu erhalten, und
    ii) Kombinieren der Vertikalzwischenwerte, um Vertikalpixel hoher Auflösung auf Basis von Vertikalrichtungsanalysen zu erzeugen, und

e) Kombinieren der Diagonalpixel hoher Auflösung, der Horizontalpixel hoher Auflösung und der Vertikalenpixel hoher Auflösung, um die Bilder oder das Video hoher Auflösung zu bilden.

**2.** Verfahren nach Anspruch 1, wobei die Diagonalpixel hoher Auflösung aus benachbarten Pixeln niedriger Auflösung entlang der 45°-Richtung und der 135°-Richtung erzeugt werden.

**3.** Verfahren nach Anspruch 1, wobei die Horizontalpixel hoher Auflösung aus benachbarten Pixeln niedriger Auflösung entlang der horizontalen Richtung und der Diagonalpixel hoher Auflösung entlang der vertikalen Richtung erzeugt werden.

**4.** Verfahren nach Anspruch 1, wobei die Bidirektionalfilterung weiter aufweist:

    a) Berechnen von Richtungsvektordifferenzen und
    b) Berechnen von Richtungsgewichten auf Basis der Richtungsvektordifferenzen.

**5.** Verfahren nach Anspruch 4, wobei die Richtungsgewichte beim Erzeugen der Vertikalpixel hoher Auflösung wiederbenutzt werden, wenn die Richtungsgewichte für die Horizontalpixel hoher Auflösung vor den Vertikalpixeln hoher Auflösung erhalten werden.

**6.** Verfahren nach Anspruch 4, wobei die Richtungsgewichte beim Erzeugen der Horizontalpixel hoher Auflösung wiederbenutzt werden, wenn die Richtungsgewichte für die Vertikalpixel hoher Auflösung vor den Horizontalpixeln hoher Auflösung erhalten werden.

**7.** Verfahren nach Anspruch 1, wobei die Vertikalpixel hoher Auflösung aus benachbarten Pixeln niedriger Auflösung entlang der vertikalen Richtung und den Diagonalpixeln hoher Auflösung entlang der horizontalen Richtung erzeugt werden.

**8.** Hochskalierungssystem zur Erzeugung von Bildern oder Video hoher Auflösung aus Bildern oder Video niedrigerer Auflösung, die bzw. das Pixel niedriger Auflösung aufweisen bzw. aufweist, implementiert mit einer Recheneinrichtung, die aufweist:

    a) ein Analysemodul (932), konfiguriert zum Bestimmen von Pixelintensitäten der Pixel niedriger Auflösung in vier Richtungen,

b) ein Diagonalmodul (934), das an das Analysemodul operativ gekoppelt ist, wobei das Diagonalmodul konfiguriert ist zum Erzeugen von Diagonalpixeln hoher Auflösung durch Anwenden einer doppelseitigen Anpassungsinterpolation auf die Pixel niedriger Auflösung entlang einer 45°-Richtung und einer 135°-Richtung durch:

    i) Berechnen von zwei Einseitiginterpolationsresultaten
    ii) Berechnen von zwei Einseitig-Übergangsdominanzpegeln, die durch Intensitätsdifferenzen zwischen den Einseitiginterpolationsresultaten und benachbarten Pixeln niedriger Auflösung bestimmt werden, und
    iii) Berechnen von zwei Einseitiggewichten auf Basis der Übergangsdominanzpegel,
    iv) Gewichtetfiltern der zwei Einseitiginterpolationsresultate unter Benutzung der Einseitiggewichte, um Diagonalzwischenwerte zu erhalten, und

Kombinieren der Diagonalzwischenwerte unter Benutzung einer Richtungsfilterung, um Diagonalpixel hoher Auflösung auf Basis von zwei Diagonalrichtungsanalysen zu erhalten,

c) ein Horizontalmodul (936), das an das Diagonalmodul operativ gekoppelt ist, wobei das Horizontalmodul konfiguriert ist zum Erzeugen von Horizontalpixeln hoher Auflösung durch:

    i) Anwenden einer Mehrfachabgriffsinterpolation auf die Pixel niedriger Auflösung entlang einer horizontalen Richtung, um Horizontalzwischenwerte zu erhalten, und
    ii) Kombinieren der Horizontalzwischenwerte, um Horizontalpixel hoher Auflösung auf Basis von Horizontalrichtungsanalysen zu erzeugen,

d) ein Vertikalmodul (938), das an das Horizontalmodul operativ gekoppelt ist, wobei das Vertikalmodul konfiguriert ist zum Erzeugen von Vertikalpixeln hoher Auflösung durch:

    i) Anwenden einer Mehrfachabgriffsinterpolation auf die Pixel niedriger Auflösung entlang einer vertikalen Richtung, um Vertikalzwischenwerte zu erhalten, und
    ii) Kombinieren der Vertikalzwischenwerte, um Vertikalpixel hoher Auflösung auf Basis von Vertikalrichtungsanalysen zu erzeugen, und

e) ein Kombinierungsmodul (940), das an das Vertikalmodul operativ gekoppelt ist, wobei das Kombinierungsmodul konfiguriert ist zum Kombinieren der Diagonalpixel hoher Auflösung, der Horizontalpixel hoher Auflösung und der Vertikalpixel hoher Auflösung, um die Bilder oder das Video hoher Auflösung zu bilden.

**9.** System nach Anspruch 8, wobei die bidirektionale Filterung aufweist:

    a) Berechnen von Richtungsvektordifferenzen und
    b) Berechnen von Richtungsgewichten auf Basis der Richtungsvektordifferenzen.

**10.** System nach Anspruch 8, wobei:

    a) die Richtungsgewichte bei der Erzeugung der Horizontalpixel hoher Auflösung wiederbenutzt werden, wenn die Richtungsgewichte für die Vertikalpixel hoher Auflösung vor den Horizontalpixeln hoher Auflösung erhalten werden, und
    b) die Richtungsgewichte bei Erzeugung der Vertikalpixel hoher Auflösung wiederbenutzt werden, wenn die Richtungsgewichte für die Horizontalpixel hoher Auflösung vor den Vertikalpixeln hoher Auflösung erhalten werden.

**11.** System nach Anspruch 8, wobei:

    a) Die Vertikalpixel hoher Auflösung aus benachbarten Pixeln niedriger Auflösung entlang der vertikalen Richtung und den Diagonalpixeln hoher Auflösung entlang der horizontalen Richtung erzeugt werden, und
    b) die Horizontalpixel hoher Auflösung aus benachbarten Pixeln niedriger Auflösung entlang der horizontalen Richtung und den Diagonalpixeln hoher Auflösung entlang der vertikalen Richtung erzeugt werden.

**Revendications**

1. Procédé de conversion ascendante de génération d'images ou de vidéo de résolution supérieure à partir d'images ou de vidéo de résolution inférieure comprenant des pixels de résolution faible sur un dispositif informatique comprenant :

   a. la détermination d'intensités de pixel des pixels de résolution faible le long de quatre directions ;
   b. la génération de pixels de résolution élevée diagonaux par application d'une interpolation adaptative bilatérale aux pixels de résolution faible le long d'une direction à 45° et une direction à 135° par :

      i. calcul de deux résultats d'interpolation unilatérale ;
      ii. calcul de deux niveaux de dominance de transition unilatérale qui sont déterminés par des différences d'intensité entre les résultats d'interpolation unilatérale et des pixels de résolution faible voisins ;
      iii. calcul de deux pondérations unilatérales sur la base des niveaux de dominance de transition ; et
      iv. filtration pondérée des deux résultats d'interpolation unilatérale en utilisant les pondérations unilatérales pour obtenir des valeurs intermédiaires diagonales ;

   combinaison des valeurs intermédiaires diagonales en utilisant une filtration bidirectionnelle pour générer des pixels de résolution élevée diagonaux sur la base de deux analyses de direction diagonale ;
   c. génération de pixels de résolution élevés horizontaux par :

      i. application d'une interpolation multi-canaux aux pixels de résolution faible le long d'une direction horizontale pour obtenir des valeurs intermédiaires horizontales ; et
      ii. combinaison des valeurs intermédiaires horizontales pour générer des pixels de résolution élevée horizontaux sur la base d'analyses de direction horizontale ;

   d. générer des pixels de résolution élevée verticaux par :

      i. application d'une interpolation multi-canaux aux pixels de résolution faible le long d'une direction verticale pour obtenir des valeurs intermédiaires verticales ; et
      ii. combinaison des valeurs intermédiaires verticales pour générer des pixels de résolution élevée verticaux sur la base d'analyses de direction verticale ; et

   e. combinaison des pixels de résolution élevée diagonaux, les pixels de résolution élevée horizontaux et les pixels de résolution élevée verticaux pour former lesdites images ou vidéo de résolution élevée.

2. Procédé de la revendication 1 dans lequel les pixels de résolution élevée diagonaux sont générés à partir de pixels de résolution faible voisins le long de la direction à 45° et la direction à 135°.

3. Procédé de la revendication 1 dans lequel les pixels de résolution élevée horizontaux sont générés à partir de pixels de résolution faible voisins le long de la direction horizontale et des pixels de résolution élevée diagonale le long de la direction verticale.

4. Procédé de la revendication 1 dans lequel le filtrage bidirectionnel comprend en outre :

   a. le calcul de différences de vecteur directionnel ; et
   b. le calcul de pondérations directionnelles sur la base des différences de vecteur directionnel.

5. Procédé de la revendication 4 dans lequel les pondérations directionnelles sont réutilisées lors de la génération des pixels de résolution élevée verticaux, si les pondérations directionnelles sont obtenues pour les pixels de résolution élevée horizontaux avant les pixels de résolution élevée verticaux.

6. Procédé de la revendication 4 dans lequel les pondérations directionnelles sont réutilisées lors de la génération des pixels de résolution élevée horizontaux, si les pondérations directionnelles sont obtenues pour les pixels de résolution élevée verticaux avant les pixels de résolution élevée horizontaux.

7. Procédé de la revendication 1 dans lequel les pixels de résolution élevée verticaux sont générés à partir de pixels de résolution faible voisins le long de la direction verticale et des pixels de résolution élevée diagonaux le long de la direction horizontale.

8.  Système de conversion ascendante pour générer des images ou vidéo de résolution supérieure à partir d'images ou vidéo de résolution inférieure comprenant des pixels de résolution faible mis en oeuvre avec un dispositif informatique comprenant :

    a. un module d'analyse (932) configuré pour déterminer des intensités de pixel des pixels de résolution faible dans quatre directions ;
    b. un module diagonal (934) fonctionnellement couplé au module d'analyse, le module diagonal étant configuré pour générer des pixels de résolution élevée diagonaux par application par application d'une interpolation adaptative bilatérale aux pixels de résolution faible le long d'une direction à 45° et une direction à 135° par :

    i. calcul de deux résultats d'interpolation unilatérale;
    ii. calcul de deux niveaux de dominance de transition unilatérale qui sont déterminés par des différences d'intensité entre les résultats d'interpolation unilatérale et des pixels de résolution faible voisins ;
    iii. calcul de deux pondérations unilatérales sur la base des niveaux de dominance de transition ; et
    iv. filtration pondérée des deux résultats d'interpolation unilatérale en utilisant les pondérations unilatérales pour obtenir des valeurs intermédiaires diagonales ;

    et combinaison des valeurs intermédiaires diagonales en utilisant une filtration bidirectionnelle pour générer des pixels de résolution élevée diagonaux sur la base de deux analyses de direction diagonale ;
    c. un module horizontal (936) fonctionnellement couplé au module diagonal, le module horizontal étant configuré pour générer des pixels de résolution élevée horizontaux par :

    i. application d'une interpolation multi-canaux aux pixels de résolution faible le long d'une direction horizontale pour obtenir des valeurs intermédiaires horizontales ; et
    ii. combinaison des valeurs intermédiaires horizontales pour générer des pixels de résolution élevée horizontaux sur la base d'analyses de direction horizontale ;

    d. un module vertical (938) fonctionnellement couplé au module horizontal, le module vertical étant configuré pour générer des pixels de résolution élevée verticaux par :

    i. application d'une interpolation multi-canaux aux pixels de résolution faible le long d'une direction verticale pour obtenir des valeurs intermédiaires verticales ; et
    ii. combinaison des valeurs intermédiaires verticales pour générer des pixels de résolution élevée verticaux sur la base d'analyses de direction verticale ; et

    e. un module de combinaison (940) fonctionnellement couplé au module vertical, le module de combinaison configuré pour combiner les pixels de résolution élevée diagonaux, les pixels de résolution élevée horizontaux et les pixels de résolution élevée verticaux pour former lesdites images ou vidéo de résolution élevée.

9.  Système de la revendication 8 dans lequel le filtrage bidirectionnel comprend :

    a. le calcul de différences de vecteur directionnel ; et
    b. le calcul de pondérations directionnelles sur la base des différences de vecteur directionnel.

10. Système de la revendication 8, dans lequel :

    a. des pondérations directionnelles sont réutilisés lors de la génération des pixels de résolution élevée horizontaux, si les pondérations directionnelles sont obtenues pour les pixels de résolution élevée verticaux avant les pixels de résolution élevée horizontaux ; et
    b. les pondérations directionnelles sont réutilisées lors de la génération des pixels de résolution élevée verticaux, si les pondérations directionnelles sont obtenues pour les pixels de résolution élevée horizontaux avant les pixels de résolution élevée verticaux.

11. Système de la revendication 8, dans lequel :

    a. les pixels de résolution élevée verticaux sont générés à partir de pixels de résolution faible voisins le long de la direction verticale et des pixels de résolution élevée diagonaux le long de la direction horizontale ; et

b. les pixels de résolution élevée horizontaux sont générés à partir de pixels de résolution faible voisins le long de la direction horizontale et des pixels de résolution élevée diagonale le long de la direction verticale.

**Fig. 1**

Bi-directional analysis for
HR position 1

Bi-directional analysis for
HR position 2

Bi-directional analysis for
HR position 3

Fig. 2

**Fig. 3**

**Fig. 4**

**Fig. 5**

**Fig. 6**

**Fig. 7**

**Fig. 8**

900

902    904    906    908    920

| Network Interface | Memory | Processor | I/O | Upscale HW |
| | Bus | | | |

910

Upscale Application    930

934    938
932    936    940

Storage

912

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002076121 A

- US 2006115184 A

**Non-patent literature cited in the description**

- **ZHANG LEI et al.** An edge-guided image interpolation algorithm via directional filtering and data fusion. *IEEE TRANSACTIONS ON IMAGE PROCESSING,* August 2006, vol. 15 (8), 2226-2238